# EUROPEAN PATENT APPLICATION

(11) **EP 3 228 895 A1**
(43) Date of publication of application: **11.10.2017**
(21) Application number: 16164187.3
(22) Date of filing: 07.04.2016
(51) Int. Cl.: F16D 48/06

(54) **SAFETY COUPLING**

(71) Applicant: Voith Patent GmbH, 89522 Heidenheim (DE)
(72) Inventor: Mehlich, Andreas, 48429 Rheine (DE); Westberg, Hakan, 82434 Hudiksval (SE)

(57) **Abstract**

The invention is directed on a torque limiting coupling (3) for a driveline (2). An input side (4) of the torque limiting coupling (3) is connectable to a power unit (2) and an output side (5) is connectable to a load (6). A first speed sensor (10) is assigned to the input side (4) and a second speed sensor (20) is assigned to the output side (5) of the torque limiting coupling (3). At least one of the sensors comprises at least 30, preferable at least 40, markings.

## Description

### TECHNICAL FIELD OF THE INVENTION

The present invention relates to a safety coupling. The safety coupling is used to connect of a first rotatable shaft with a second rotatable shaft. The first rotatable shaft can be driven by a power unit also named motor. The second shaft is connected with a load. In an overload situation the connection of the first shaft and the second shaft is slipping or disconnected.

In a flyer of the company Renk with the title "Innovative Power Transmission" a slip monitoring of a safety coupling is disclosed on page 28. The slip monitoring is available for monitoring the operation of the safety coupling. It operates on the basis of differential speed detection. In addition to continuous monitoring, it provides information on changes in the operating state. An alarm is issued directly after release of the safety coupling due to an overload. If this is coupled appropriately to the machine control, it can also trigger other devices such as automatic cut-off. This signifies additional protection of machines and systems. The slip monitoring continuously checks the rotary pulses on both sides of the safety coupling by the use of sensors. During normal operation, the input drive side and output drive side constantly supply completely synchronous values. If a speed difference should occur, the timing sequence of the two pulses also inevitably changes. This may happen due to the slipping of a friction coupling, or on release of the safety coupling. Sensors are used for detecting pulses triggered by bores, webs, screw heads or interruptions in the surface. Using bores, screw heads, webs or interruptions the number of the markings is limited and are normally in the range of one or two per full circle. Scanning can take place radially or axially. However, it is important to ensure that identical markings of identical quantity are distributed on the circumference on either sides of the safety coupling. Only this will ensure synchronous control. The unit's principle of operation can be recognized easily by analysis of the pulse diagram delivered by the sensors. Due to its conception, this unit is equally suitable for monitoring friction couplings as well as safety couplings with shearing elements.

Company Voith provides torque limiting couplings named SmartSet. Torque limiting couplings are also named safety coupling. The SmartSet safety coupling allows slipping over a predetermined range before the SmartSet is disengaged. The SmartSet comprises a mechanical release protection. The maximum of a possible continuously slipping event is limited to less than one full turn of the SmartSet coupling. So the slipping range is limited because of mechanical limitations. In the case of short and frequently slipping events of the SmartSet the safety coupling can be heated up. The number of slip events and a heating up of the safety coupling effects the life time of the safety coupling.

Further torque liming couplings named SlipSet of Voith, for example friction couplings, do not have a mechanical release protection. Friction couplings are also named friction clutches.

It is an object of the invention to provide an enhanced torque limiting coupling.

Further it is an object of the invention to provide a torque limiting coupling comprising an improved monitoring system.

It is an object of the invention to provide a torque limiting couplings with an enlarged applicability.

It is a further object of the invention to provide a driveline and method of operation of an driveline with an enlarged functionality.

It is further an object to provide an improved slip angle measurement.

The object of the invention is solved by the independent claims.

By the use of an encoder comprising at least 30 markings it is possible to detect slip events more accurately. In a preferred embodiment the encoder comprises at least 40 markings. By the selection of the number of the markings a slip can be detected more precise. In some applications it is important to detect a slip very early, so it is possible to prevent the driveline from damages by adjusting of the driveline or for example to execute an disengagement of the torque limiting coupling triggered in dependence of the detected slip.

In a preferred embodiment at least a revolution counter marking is peocided for identification of full turns and for determination of the angle position. There by it is possible to provide a high resolution slip angle measurement. By a counter marking it is possible to determine full turns in a fast and easy way.E specially if the input side and the output side comprises an revolution counter marking it is possible to determine the angle position of the input side and the output side separately. Further it is possible to determine the angle position of the input side and to determine the angle position of the output side. By comparison of the angle position of the input side and the output side a slip in the torque limiting coupling can be determined in an easy way. By the separate determination of the angle position of both sides there is more freedom in the mechanical realization. Especially there is no need to have on the input side and the output side the same number of markings. The sensor signals have not to be assigned to same angle amounts.

In a preferred embodiment at least one of the used sensors is able to detect at least 5000 markings/signals, preferably 10000 markings/signals per second. In some embodiments and use cases it is preferred to use at least one sensor which is able to detect at least 15000 markings/signals per second.

In a preferred embodiment the revolution counter marking is integrated into at least one of the sensors. For example the first sensor comprises an encoder and a first detector for reading out the encoder. For establishing the counter marking the first encoder comprises an irregularity. The irregularity is designed to be definitely. For example the encoder comprises impulse markings, wherein the impulse markings are arranged with regular distances there between. For establishing a revolution counter marking, one of the impulse markings is missing. The gap in the chain of detected impulses could not be a result of change in speed in such short time intervals because of the mass inertia of the driveline or the input part or output part of the driveline. So the gap is a unique marking.

In a preferred embodiment on the input side an additional input side sensor is provided for at least determination of the direction of the rotation and/or on the output side an additional output side sensor is provided for at least determination of the direction of the rotation. For example a toothed wheel is arranged on the input side as the first encoder and the additional sensor comprises a further encoder also arranged on the input side. The markings of the further encoder on the input side is arranged phase shifted to the markings of the first encoder on the input side, wherein by detecting the markings of the first encoder and the markings of the further encoder on the input side, by the sequence of the detected markings of the first and further encoder, the direction of movement is known. A preferred phase shift is 90°. The revolution marking can also be part of the further encoder instead of the first encoder. It is also possible to use the encoder of the first sensor and/or second sensor for the as encoder of the additional sensor of that side. The detector of the additional sensor of the respectively side is arranged with a phase shift in respect to the first/second sensor. By such an embodiment the angle of the input side is detectable in an easy way with high resolution.

In a preferred embodiment of the invention at least one of the encoders of the sensors of the input side are torque proof arranged on the input side of the torque limiting coupling and/or at least one of the encoders of the sensors of the output side are torque proof arranged on the output side of the torque limiting coupling. So a very compact torque limiting coupling is provided. It is further possible to arrange the sensors, detectors and/or encoders in a radial or axial direction. So available space can be used and the torque limiting coupling can be very compact.

It is further possible to arrange the sensors on the input shaft of the driveline or on the output shaft of the driveline. It is also possible to arrange one of the sensors on the torque limiting coupling and the further sensor on the input shaft and/or output shaft.

In a preferred embodiment a control unit is assigned to the torque limiting coupling for determination of overload event, especially slipping events, of the torque limiting coupling. A release mechanism can be triggered by the control unit. The release mechanism can be part of the torque limiting coupling to initiate a disengagement of the torque liming coupling. In an alternative solution a further coupling element as an release mechanism is arranged for a disconnection between the power unit and the load. The release mechanism can be an electronic device for arrangement of a disconnection of the torque limiting coupling, for example the torque limiting coupling comprises a pressure chamber to provide a predetermined torque to be transferred by the torque limiting coupling, wherein the transferrable torque is adjustable by the pressure in the pressure chamber. So it is possible to depressurize the pressure chamber by an electronic device. For example a closing of the pressure chamber is opened electronically. In the case of a shear off device for release of the torque limiting coupling, the shear-off device can be sheared of by an electro mechanical device. The release mechanism can be an internal release mechanism, part of the torque limiting coupling or an external release mechanism, for example a solenoid or an extractor bolt.

In a preferred embodiment the control unit is assigned to the torque limiting coupling for determination of overload event of the torque limiting coupling. The control unit comprises at least an emitter, also named transmitter, for sending out data and/or trigger signals. In a preferred embodiment the control unit comprises a data storage unit, also named event log, for storing of the slip history, alarms, out of allowed range signals preferably comprising time and date information.

In a preferred embodiment an accumulation of the determined slip angles is provided for determination of service intervals and/or for dynamic determination of an acceptable slip. In the case the acceptable slip is exceeded a release is activated by the release mechanism and/or an information/trigger is sent out. In this determination especially small oscillating slip events can be taken under respect. A small slip event is in the range up to 10° preferably up to 5° and more preferable up to 3°.

In a further preferred embodiment the torque limiting coupling comprises a cooling system, wherein the cooling is taken under account in calculating an allowed overload.

Driveline comprising a power unit, a load and an embodiment of a torque limiting coupling as described before. A load control unit is assigned to the load for controlling the load and a control unit is assigned to the power unit. The load is controllable under respect of data of the control unit and or the power unit is controllable under respect of the data of the control unit. A data transfer between the load control unit and the control unit and/or between the power control unit and the control unit can be arranged wired or wireless. In the case of several overload events the power unit can be adjusted before a release mechanism have to be activated. Thereby shut down times of the driveline are reducible. Further it is possible to analyze the effect of fluctuations form the load side. It is possible to optimize the output of the load based on the measured slip. Especially if the driveline is used for electrical power generation and is connectable to an electrical grid, especially the effect of micro shortcuts can be analyzed and respected by the control unit.

In a preferred embodiment, the driveline comprises an active brake system to prevent a shut down or a disengagement activated by the release mechanism. The active brake system is in data connection with the control unit.

In a preferred embodiment at least two of the control units are integrated into a central control unit. In a further embodiment the data generated or collected by the control unit and/or power control unit and/or load control unit are transferred to a central control unit. A remote access to the driveline especially to controllers of the drive line is possible. So an adjustment of the driveline can be initiated from remote.

Method for usage of a torque limiting coupling
with the steps:
- determination of an angle position of the input side, wherein a full turn of the input side is characterized by at least 30 signals, preferably by at least 50 signals, rotating in one direction • determination of an angle position of the output side, wherein a full turn of the output side is characterized by at least 30 signals, preferably by at least 50 signals, rotating in one direction
- determination of the slip by determination of the difference of the angle position of the input side and the output side
- calculating an service interval and/or an predetermined value of overload
- sending out a trigger information for indication of a service interval and/or for indication of an overload and/or for activation of the release mechanism and/or for activation of a further coupling. By the number of the signals per full turn, it is possible to determine the slip more accurately. So it is possible to detect also small slip events. Also it is possible to detect slipping of the torque limiting coupling very fast. So it is possible to trigger an adjustment of the driveline very fast to prevent a damage of the driveline or an disengagement of the torque limiting coupling. Further it becomes possible to use this method to initiate a disengagement of the torque limiting coupling by an trigger signal generated in dependence of the detected slip.

In a preferred method the control unit calculates an overload value and wherein when a predetermined power unit overload value is exceeded the control unit sends data to the power control unit and/or a load control unit and the output of the power unit and/or load is adjusted. The power input by the power unit can be adjusted to maintain the uptime of the driveline. An individual adjustment per driveline is possible. Other aspects and advantages of the invention will become apparent from the following description.

### BRIEF DESCRIPTION OF THE DRAWINGS

The invention, together with objects and advantages thereof, may best be understood by reference to the following description of the present preferred embodiments together with the accompanying drawings. The scope of this invention is not limited by these embodiments.
- Fig.1:: Driveline comprising a torque limiting coupling and a slip angle measurement
- Fig.2:: Driveline comprising a torque limiting coupling and an enhanced slip angle measurement
- Fig.3:: Toothed wheel usable as impulse generator
- Fig. 4:: Impulse generator in form of a readable stripe pattern

### DETAILED DESCRIPTION OF THE PREFFERED EMBODIMENTS

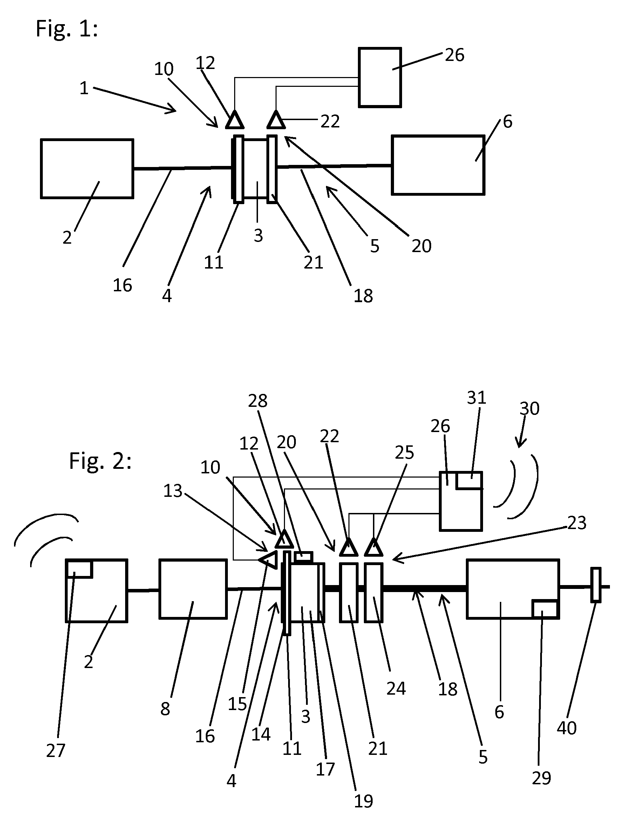

Figure 1 discloses a driveline 1 comprising torque limiting coupling 3. The driveline 1 comprises a power unit 2 for driving an input shaft 16 of an input side 4 rotationally. The input shaft 16 is connected with a torque limiting coupling 3. By the torque limiting coupling torque is transferrable to an output shaft 18 of an output side 5. The output shaft 18 is connected with a load 6. In this embodiment the torque limiting coupling 3 comprises a first encoder 11. The first encoder 11 is an impulse generator. The encoder is read out by a first detector 12. The signals read out by the first detector are transferred to a coupling control unit 26. In the shown embodiment there is a data line between the first detector 12 and the coupling control unit 26, but a wireless connection is also possible. The first encoder 11 and the first detector 12 are parts of a first sensor 10. The torque limiting coupling 3 comprises a first part torque proof connected to the input shaft 16. For connection of the first part of the torque limiting coupling 3 a flange can be used. Further the torque limiting coupling 3 comprises a second part torque proof connected with the output shaft 18. A second encoder 21 of a second sensor 20 is torque proof connected with the second part of the torque limiting coupling 3. A second detector 22 for reading out the second encoder 21 is in signal connection with the coupling control unit 26. The connection can be wired or wireless. The control unit 26 determines the angle position of the first part of the torque limiting coupling 3 based on the signals of the first sensor 10. Further the coupling control unit determines the angle position of the second part of the torque limiting coupling 3. The angle positions of the first part and the second part of the torque limiting coupling are determined for equal instants of time. For determination of a slippage of the torque limiting coupling 3, the difference of the determined angle positions at an instant of time detected by the first sensor 10 and the second sensor 20 is determined. A determined difference correlates to a slippage within the torque limiting coupling 3. By storing the slipping angles over the time, the slipping events and slippage duration can be analyzed. Small slip events can be determined and long slip events can be determined. Small slip in this embodiment events with an slipping angles up to 5°. In dependence of the determined slip events trigger signals are sent out. It is possible to determine service intervals under respect of the determined slipping events under respect of the kind of slipping event. Because of the first and second encoder 11, 21 arranged on the torque limiting coupling 3 and the detectors 12, 22 are assigned thereto only the torque limiting coupling is enhanced and the remaining driveline 1 is not affected.

Figure 2 discloses a driveline 1. The driveline comprises a power unit. The power unit 2 is connected with a gear 8. The gear is used for transformation of rotational speed and torque. The input shaft 16 on the input side 4 of the torque limiting coupling 3 is connected to the gear 8. So power of the power unit is transferrable over the gear to the input side 4 of the torque limiting coupling 3. The torque limiting coupling 3 comprises an input part 17 torque proof connected with the input shaft 16 and a second part 19 torque proof connected to the output shaft 18. A first encoder 11 is also used as additional encoder on the input side 14 assigned to the input shaft 16. The first encoder is torque proof connected with the first part of the torque limiting coupling 17. It is also possible to arrange the first encoder 11 on the first part of the torque limiting coupling 17 and a separate additional encoder on the input side 14 on the input shaft 16, not shown.

A first detector 12 assigned to the first encoder 11 is arranged radial to read out the first encoder 11. An additional detector on the input side 14 is arranged parallel to the input shaft 16. So the additional detector 15 is arranged axial to read out the first encoder 11.

An second encoder 21 of the second sensor 20 is arranged on the output shaft 18. In this embodiment the output shaft 18 has a greater diameter than the input put shaft 16 or the outer diameter of the torque limiting coupling 3. It is possible to arrange the second encoder 21 directly on the outer diameter. The number of impulses per full circle can be different. An additional sensor on the output side 23 is assigned to the output shaft18. In this case the additional sensor on the output side 23 comprises a additional detector 25 and an additional encoder 25 assigned to the output side. Here it is also possible to use the second encoder 21 as additional encoder on the output side 25. Because the angle position of the input side 4 and the angle position of the output side 5 are determined independent from each other it is possible to use encoders 11, 14, 21, 24 wherein impulses of the encoders are assigned to different angle dimensions.

To be able to detect rotational direction one encoder, first 11 or second encoder 21, and two detectors, first detector 12 together with the additional detector input side15 or second detector 22 together with additional detector output side 25, on one side of the coupling are needed. The detectors are preferably arranged with a 90 ° phase angle. The two detectors can be integrated into a physical unit, named quadrature detectors. Two separate encoders 21, 24, mounted on the same side, can also be used but then they need to be identical with the same amount of trigger points.

The second encoder 21 and second detector 22 on the output side 5 of the coupling 3 are needed. If the rotational direction of that output side should be detected individually, then two detectors, second 22 and additional detector 25 are needed also on the output side 5.

If the encoders are symmetrical, meaning the 1 marking and the 0 marking correspond to equal rotational angle, then both the 1-marking and the 0-marking signal can be used as triggers in the coupling control unit 26. The spacing between the 1-marking and the 0- marking is even. This makes the measured resolution twice as fine as the number of positive triggers, 1- markings, of the encoder. Thanks to this, the resolution in the slip angle detection is doubled. The time between the pulses is half as long, meaning the coupling control unit 26, if needed, can take action sooner.

If the encoder is asymmetrical, uneven spacing between the 1-marking and the 0-marking signals, then only one of the signals, 1-marking or 0-marking, can be used, giving only one signal per period. The benefit of having two detectors per encoder arranged with a 90 ° phase angle is that the coupling control unit 26 receives twice the number of pulses at twice the frequency compared to only having one sensor per encoder. In case of a symmetrical encoder four trigger signals can be used per encoder period in the coupling control unit 26.

In some cases not the 1-marking and/or the 0-marking is counted as signal, the transition from 1 to 0 and from 0 to 1. Depending on the type of sensor the detector and/or encoder can be mounted radial or axial to the shaft. Axial to the shaft is to mount it parallel to the shaft. The encoder can be a separate part, like a disc or a tape. The encoder can also be integrated in one of the coupling parts. In the embodiment shown in figure 2, the load 6 is powered by the output shaft 18. The coupling control 26 is in signal connection to the detectors 10, 13, 20 and 23. The calculation of the angle position of the first part of the torque limiting coupling 17 and the angle position of the second part 19 of the torque limiting coupling 3 is done by the coupling control unit 26. The coupling control unit 26 comprises at least a transmitter 31. The transmitter is able to send out data to a central control unit, not shown and/or to send out a trigger signal and/or data in respect of the determined slippage of the torque limiting coupling 3 to a control unit 27 of the power unit 2 and/or to a load control unit 29. So it is possible in the case to adjust the power unit 2 and/or the load 6 to reduce the number and/or duration of slippage events of the torque limiting coupling 3.

In this embodiment the load 6 has an output wherein a disconnector 40 is arranged in an output of the load 6. By the disconnector 40 it is possible to disconnect the driveline. For example if the load 6 is a generator to supply current into an electrical grid, it is possible to disconnect the generator from the grid and therewith the whole driveline from the grid. So in the case of disturbances from the side of the electrical grid, especially micro interruptions, or in the case of disturbances from the driveline itself, it is possible to disconnect the driveline from the electrical grid. Further it is possible to analyze the effect of disturbances from the side of the load or grid on the driveline 1. As a power unit 2 especially a gas turbine or a gas motor can be used. Such drivelines can be used for stabilization of an electrical grid.

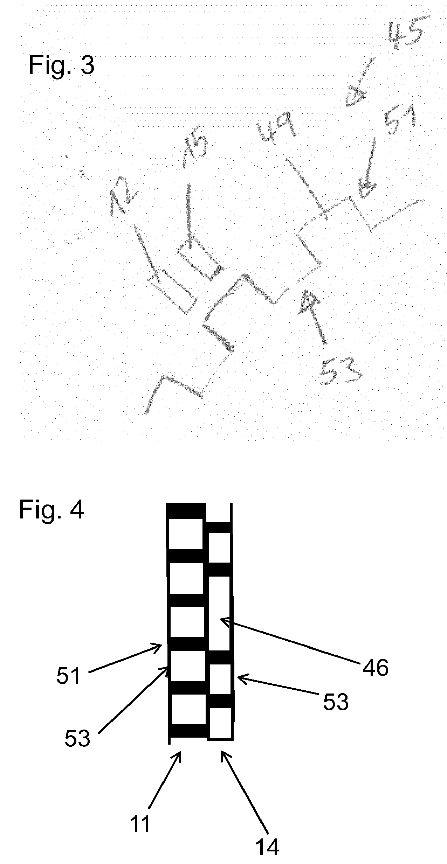

Figure 3 discloses a toothed wheel 45. This toothed wheel 45 comprises the first encoder 11 in form of teeth 49 arranged in radial direction. Every tooth 49 is read out by a contactless working first detector 12 and additional detector 15. As an contactless working sensor a light sensitive detector or an inductive working detectors can be used. Further an inductive quadrature sensor can be used. Every tooth 49 is a 1- marking 51. The distances of the 0-marking 53 and the 1-marking 51 are equal. The additional detector 15 is arranged in respect of the first detector 12 with a phase shift of 90°. So the direction of rotation is known by the sequence of the impulses detected by the first detector 12 and the additional detector 15.

The arrangement of the first, second and additional encoders together with the assigned detectors can be chosen under respect of the available space. To arrange all encoders on the torque limiting coupling has the charm that the input side 4/ input shaft 16 and the output side 5/output shaft 18 is not affected. To integrate the revolution counter marking 46 in at least one of the encoders 11, 14, 21, 24 the defined angle position can be determined in relation to the revolution counter marking. If the number of impulses per full revolution is known and the direction of rotation is known, the angle position of the other side can be also determined in respect to this revolution counter marking 46. In some cases a revolution counter marking 46 is assigned to both sides for simplification of the determination of the specific angle position of both sides for an instant of time.

To realize the counter revolution counter marking by a missing tooth or a missing encoder marking, the revolution counter marking 46 can be realized in an easy way. Because of mass gravity speed changes in such short time intervals are not possible. So by such a missing marking the angle position is uniquely defined.

Figure 4 discloses an alternative realization of encoders. There is a first encoder 11 and an additional encoder 14 realized in the form of a stripe. The stripe comprises markings which are read out by detectors, not shown, assigned to the encoder. For example a magnetic or reflective structure can be used as an encoder 11, 14. The stripe of figure 4 can be arranged on the outer circumference of one of the sides 4, 5 or parts 17, 19. The encoders 11, 14 comprises a 1- marking 51 and a 0-marking 53, wherein the distances of the 1- marking 51 and the 0-marking 53 are uneven.

As an indication for a slippage in the torque limiting coupling heating up of the torque limiting coupling will take place. So a temperature sensor arranged in or at the torque limiting coupling can be used for detection of slippage. For a more precise measurement the temperature sensor is arranged in at least one of the friction surfaces. It is possible to trigger disengagement in dependence of the detected temperature. Such a temperature sensor can be used additionally to the determination of the slip angle determined based on the angle position of the input side 4 and the output side 5.

The determination of fast oscillating slips based on the determined angle position of the input side and the output side is possible. Further the service intervals can be determined based on the slippage of the torque limiting coupling, wherein slippage in both directions influences the service interval and further actions like disengagement.

Based on the determined slippage and the friction engagement of the friction surfaces of the torque limiting coupling 3 the generation of heat of can be calculated. Especially the heat at the friction surfaces can be calculated.

It is possible to calculate the allowed slip angle dynamically, for example to take under respect cooling effects or an active cooling. Further an active reduction of the slip is possible by regulation and/or controlling of the power unit 2 and/or the load and/or an active brake. The regulation or controlling can be realized by data connection directly or indirectly with coupling control unit 26. The data and trigger signals can be transferred for example by the use of internet/SMS and further wireless data transfer. By the active control of slippage events a release of the torque limiting coupling or a disconnection of the driveline can be prevented. The active control can be established online with a remote access or local.

An event detection can be established by determination of slip, over-speed of input side or output side, slip speed and slip direction. The results can be saved for analysis.

It is possible to adjust stored limiting parameters. The limiting parameter of acceptable slip of the torque limiting coupling can be stored in the coupling control unit.

Alternative or additional the rotational speed of the input side 4 and the output side 5 can be calculated based on the signals of at least the sensors 10 und 20. Further sensor signals of additional sensors 13 and 23 can be used.

### REFERENCE LIST

- 1: driveline
- 2: power unit, motor
- 3: safety coupling, torque limiting coupling
- 4: input side
- 5: output side
- 6: load, generator
- 7: connector (grid)
- 8: gear
- 10: first sensor (motor side)
- 11: first encoder
- 12: first detector, contactless detector
- 13: additional sensor input side
- 14: additional encoder input side
- 15: additional detector input side
- 16: input shaft
- 17: 1^{st} part of the torque limiting coupling
- 18: output shaft
- 19: 2^{nd} part of the torque limiting coupling
- 20: second sensor (load side)
- 21: 2^{nd} encoder
- 22: 2^{nd} detector, contactless detector
- 23: additional sensor output side
- 24: additional encoder output side
- 25: additional detector output side
- 26: coupling control unit
- 27: power control unit
- 28: release mechanism
- 29: load control unit
- 30: wireless data connection
- 31: transmitter
- 40: disconnector
- 45: toothed wheel
- 46: revolution counter marking
- 49: tooth
- 50: cut out, breakthrough
- 51: 1-marking
- 53: 0-marking

## Claims

1. Torque limiting coupling (3) for a driveline (2) wherein an input side (4) is connectable to a power unit (2) and an output side (5) is connectable to a load (6), wherein a first sensor (10) is assigned to the input side (4) and a second sensor (20) is assigned to the output side (5) of the torque limiting coupling (3), **characterized in that**,
at least one of the sensors (10, 20,), preferable both sensors (10, 20), comprises an encoder comprising at least 30, preferable 40, markings.

2. Torque limiting coupling (3) of claim 1,
**characterized in that**,
a revolution counter marking (46) for identification of full turns and/or for determination of an angle position is arranged at least on the input and/or the output side and preferable first (10) and/or the second sensor (20) comprises a revolution counter marking (46).

3. Torque limiting coupling of one of the previous claims,
**characterized in that**
the first or the second sensor is able to detect at least 5000 signals per second, preferred 10 000 signals per second.

4. Torque limiting coupling of one of the previous claims 2 to 3,
**characterized in that**,
on the input side an additional input side sensor (13) is provided.

5. Torque limiting coupling of one of the previous claims,
**characterized in that**,
the counter marking (46) is integrated into an encoder (11, 14, 21, 24) of at least one of the sensors (10, 20, 13, 23), wherein the counter marking is an unambiguous irregularity.

6. Torque limiting coupling of one of the previous claims,
**characterized in that**
at least one of the encoders (11, 14) of sensors of the input side are torque proof arranged on the first part of the torque limiting coupling (17) and/or at least one of the encoders of sensors of the output side (21, 24) are torque proof arranged on the second part of the torque limiting coupling (19).

7. Torque limiting coupling (3) of one of the previous claims, wherein a coupling control unit (26) is assigned to the torque limiting coupling (3) for determination of overload events of the torque limiting coupling (3),
**characterized in that**
a release mechanism (28) is triggered by the coupling control unit (26).

8. Torque limiting coupling of claim 6,
**characterized in that**
the release mechanism (28) is an hydraulic, pneumatic or explosive device, preferably an electronic device or an electro-mechanic device.

9. Torque limiting coupling (3) of one of the previous claims, wherein the coupling control unit (26) is assigned to the torque limiting coupling for determination of overload event of the torque limiting coupling (3),
**characterized in that**
the coupling control unit (26) comprises an transmitter (31) for sending out data and/or trigger signals.

10. Torque limiting coupling (3),
**characterized in that**,
the torque limiting coupling (3) comprises a cooling system, wherein the cooling is taken under account in calculating an allowed overload.

11. Driveline comprising a power unit (2), a load (6) and a torque limiting coupling wherein an input side (4) of the torque limiting coupling is connectable or connected to the power unit (2) and an output side (5) of the torque limiting coupling (3) is connectable or connected to the load and wherein a first sensor (10) is assigned to the input side and a second sensor (20) is assigned to the output side (5),
**characterized in that**
at least one of the sensors (10, 20,), preferable both sensors (10, 20) comprises an encoder comprising at least 30, preferable 40, markings.

12. Driveline of claim 10,
**characterized in that** a load control unit (29) is assigned to the load (6) for controlling the load (6), wherein the load (6) is controllable under respect of data, especially determined slippage, of the coupling control unit (26).

13. Driveline of one of the previous claims comprising a torque limiting coupling of the previous claims.

14. Method for usage of a torque limiting coupling (3) within a driveline,
with the steps:
• determination of an angle position of the input side (4) wherein a full turn of the input side is **characterized by** at least 30 signals, preferably by at least 40 signals, rotating in one direction
• determination of an angle position of the output side (5) wherein a full turn of the output side is **characterized by** at least 30 signals, preferably by at least 40 signals, rotating in one direction
• determination of slip by the determination of the difference of the angle position of the input side and the output side
• calculating a service interval and/or an predetermined value of overload
• sending out a trigger information.

15. Method of claim 14,
**characterized in that**
the coupling control unit (26) calculates an overload value and wherein exceeding a predetermined overload value and the coupling control unit (26) sends an information to a power control unit (27) and/or a load control unit (29) for and the output of the power unit (2) and/or load (6) is adjusted.
